# FASCICULE DE BREVET EUROPEEN

(11) **EP 4 145 798 B1**
(45) Date de publication et mention de la délivrance du brevet: **24.04.2024**
(21) Numéro de dépôt: 22194303.8
(22) Date de dépôt: 07.09.2022
(51) Int. Cl.: H04L 45/02, H04L 45/021, H04L 41/08

(54) **PROCÉDÉ DE CONFIGURATION D'UNE JONCTION POUR UN ROUTAGE CONFORME AU PROTOCOLE DE PASSERELLE DE BORDURE _ BGP ET ROUTEUR DE BORDURE ASSOCIÉ**
VERFAHREN ZUR KONFIGURATION EINER VERBINDUNGSSTELLE FÜR DAS ROUTING GEMÄSS DEM BORDER-GATEWAY-PROTOKOLL (BGP) UND ENTSPRECHENDER BORDER-ROUTER
METHOD FOR CONFIGURING A JOINT FOR ROUTING IN ACCORDANCE WITH THE BORDER GATEWAY PROTOCOL_ BGP AND ASSOCIATED BORDER ROUTER

(30) Priorité: 07.09.2021 FR 2109352
(43) Date de publication de la demande: 08.03.2023
(73) Titulaire: THALES, 92400 Courbevoie (FR)
(72) Inventeur: PLESKOF, Maxime, 92622 GENNEVILLIERS CEDEX (FR)
(74) Mandataire: Lavoix

(56) Documents cités:
- EP-A1- 3 306 874
- US-A1- 2015 263 946
- PEIDONG ZHU ET AL: "AS Alliance based security enhancement for inter-domain routing protocol", MATHEMATICAL AND COMPUTER MODELLING, PERGAMON PRESS, OXFORD, GB, vol. 55, no. 1, 2 juin 2011 (2011-06-02), pages 241-255, XP028108953, ISSN: 0895-7177, DOI: 10.1016/J.MCM.2011.06.003 [extrait le 2011-06-14]

## Description

La présente invention concerne un procédé de configuration d'une jonction pour un routage conforme au protocole de passerelle de bordure - BGP (« Border Gateway Protocol» ) d'un réseau de communication IP.

Un réseau de communication IP (« Internet Protocol »), tel que l'Internet, peut comporter un grand nombre de machines. Un tel réseau devient rapidement extrêmement complexe à gérer, notamment pour le routage des paquets de données.

Un tel réseau est alors avantageusement subdivisé en une pluralité de domaines de routage indépendants les uns des autres. Cela permet par exemple de faciliter l'extensibilité du réseau (« scalability » en anglais), c'est-à-dire la capacité pour un opérateur d'ajouter un nouveau domaine de routage au réseau ou d'apporter des modifications au domaine de routage qu'il gère sans impacter les autres domaines de routage du réseau.

Pour la communication entre domaines de routage, chaque domaine est alors équipé d'au moins un routeur de bordure (aussi dénommé passerelle de bordure ou « Border Gateway »), propre à établir une ou plusieurs jonction(s) avec autant de routeur(s) de bordure de domaine(s) voisin(s).

Une jonction s'étend entre une première interface d'un premier routeur de bordure d'un premier domaine de routage et une seconde interface d'un second routeur de bordure d'un second domaine de routage.

Les routeurs de bordure et leurs jonctions peuvent être vus comme constituant un méta-réseau, au-dessus des réseaux internes de chaque domaine de routage.

Pour le routage sur ce méta-réseau, les routeurs de bordure mettent communément en oeuvre le protocole standardisé de passerelle de bordure, ou protocole BGP (« Border Gateway Protocol»). Le protocole BGP est standardisé. Il fait par exemple l'objet du document normatif RFC 4271.

Cependant, lors de l'ajout d'un domaine de routage à un réseau de communication IP et avant de pouvoir mettre en oeuvre un routage BGP, il est nécessaire de paramétrer manuellement les interfaces constituant les extrémités de chaque nouvelle jonction entre le routeur de bordure du domaine de routage ajouté et un routeur de bordure d'un domaine de routage voisin.

Cette configuration constitue une charge supplémentaire pour l'opérateur au moment du déploiement d'un nouveau domaine et toute erreur dans le paramétrage peut avoir des répercussions graves sur le fonctionnement global du réseau de communication IP. En effet, le paramétrage des interfaces étant repris dans les informations de routage qui sont propagées, de proche en proche, sur le méta-réseau pour la mise à jour des tables de routage BGP de chaque routeur de bordure, un identifiant erroné dans un fichier de configuration peut affecter le routage des paquets de données sur l'ensemble du réseau. Un système pour la configuration de réseaux BGP est décrit dans le document "PEIDONG ZHU ET AL: "AS Alliance based security enhancement for inter-domain routing protocol",MATHEMATICAL AND COMPUTER MODELLING, PERGAMON PRESS, OXFORD, GB,vol. 55, no. 1, 2 juin 2011, pages 241-255".

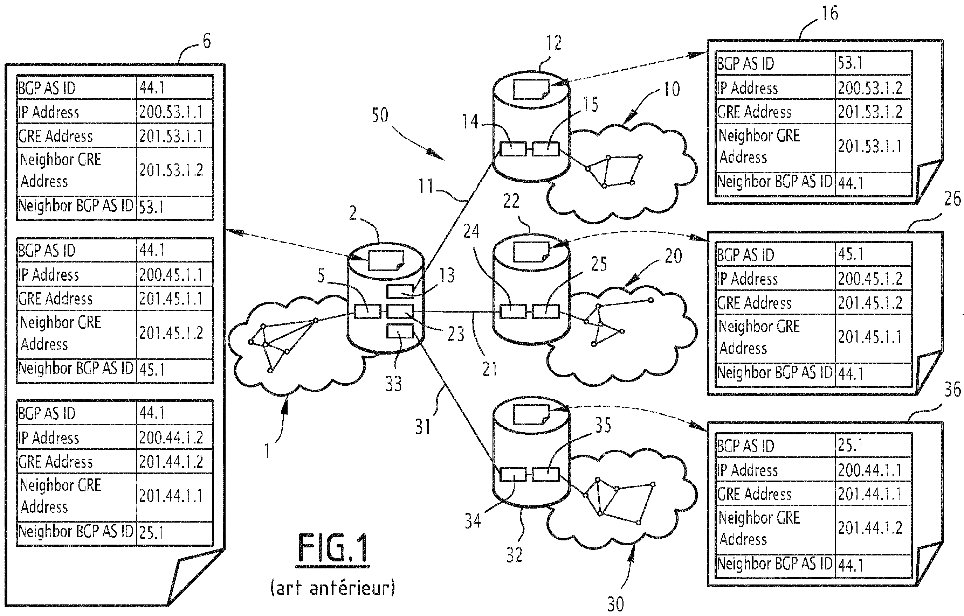

Par exemple, comme illustré sur la figure 1, lors du déploiement du domaine de routage 1 dans le réseau de communication IP 50, de sorte que le voisinage BGP du domaine 1 comporte trois domaines de routage, respectivement 10, 20 et 30, il convient de « monter » trois jonctions, respectivement 11, 21 et 31, entre le routeur de bordure 2 du domaine 1, d'un côté, et chacun des routeurs de bordure 12, 22, et 32, respectivement des domaines 10, 20 et 30, de l'autre côté.

Ainsi, la première jonction 11 nécessite la configuration d'une première interface 13 sur le routeur 2 et d'une interface 14, dite première interface, sur le routeur 12. La seconde jonction 21 nécessite la configuration d'une seconde interface 23 sur le routeur 2 et d'une interface 24, dite seconde interface, sur le routeur 22. Enfin, la troisième jonction 31 nécessite la configuration d'une troisième interface 33 sur le routeur 2 et d'une interface 34, dite troisième interface, sur le routeur 32.

En plus de ces interfaces « externes », on notera que chaque routeur de bordure possède également au moins une interface « interne » pour la connexion du routeur aux autres machines du domaine de routage que ce routeur équipe. Par exemple, le routeur 2 comporte une interface interne 5 pour la connexion au domaine 1, le routeur 12 comporte une interface interne 15 pour la connexion au domaine 10, le routeur 22 comporte une interface interne 25 pour la connexion au domaine 20, et le routeur 32 comporte une interface interne 35 pour la connexion au domaine 30.

Pour le routage BGP, chaque routeur de bordure est identifié par un identifiant, BGP AS ID. Cet identifiant BGP est constitué d'un préfixe et d'un suffixe. Un préfixe spécifique est attribué conventionnellement à chaque opérateur susceptible d'intervenir sur le réseau de communication IP. Le suffixe est librement choisi par l'opérateur. Par exemple, le préfixe est celui du domaine géré par l'opérateur et le suffixe est le numéro d'un sous-domaine de ce domaine auquel appartient le routeur de bordure considéré. On notera que si le sous-domaine est équipé de plusieurs routeurs de bordure, ceux-ci partageront le même identifiant BGP. En revanche, ils seront distingués par leurs adresses physiques respectives (adresse IP).

Ainsi, par exemple, le préfixe 44 est attribué à l'opérateur du domaine 1. Ce dernier identifie le routeur 2 avec un BGP AS ID valant « 44.1 » et une adresse IP utilisée pour établir le voisinage BGP. De manière similaire, le préfixe 53 est attribué à l'opérateur du domaine 10. Ce dernier identifie le routeur 12 avec un BGP AS ID valant « 53.1 » et une adresse IP utilisée pour établir le voisinage BGP. Le préfixe 45 est attribué à l'opérateur du domaine 20. Ce dernier identifie le routeur 22 avec un BGP AS ID valant « 45.1 » et une adresse IP utilisée pour établir le voisinage BGP. Enfin, le préfixe 25 est attribué à l'opérateur du domaine 30. Ce dernier identifie le routeur 32 avec un BGP AS ID valant « 25.1 » et une adresse IP utilisée pour établir le voisinage BGP.

Lors du déploiement du domaine 1, après l'établissement de la connexion physique entre les routeurs de bordure 2 et 12, et pour « monter » la jonction 11 sur cette connexion, l'opérateur du domaine 1 doit configurer la première interface d'extrémité 13 côté routeur 2 et l'opérateur du domaine 10 doit configurer la première interface d'extrémité 14 côté routeur 12.

Ainsi, par exemple, la première interface 13 côté routeur de bordure 2 (BGP AS ID = 44.1) est paramétrée avec les informations suivantes, contenues dans un fichier de configuration 6 du routeur 2:
IP Address : 200.53.1.1
GRE Address : 201.53.1.1
Neighbor GRE Address : 201.53.1.2
Neighbor BGP AS ID : 53.1

Parallèlement, la première interface 14 côté routeur de bordure 12 (PGP AS ID = 53.1) est paramétrée avec les informations suivantes, contenues dans un fichier de configuration 16 du routeur 12:
IP Address : 200.53.1.2
GRE Address : 201.53.1.2
Neighbor GRE Address : 201.53.1.1
Neighbor BGP AS ID : 44.1

L'identifiant « IP Address » est un identifiant physique du routeur local qui permet d'établir une liaison IP (« internet Protocol ») avec ce routeur local.

L'identifiant « GRE Address » est un identifiant virtuel attaché à une interface physique du routeur local, qui permet d'établir une liaison point à point (ou tunnel) avec cette machine. Le protocole GRE n'est pas nécessairement mis en oeuvre. Avantageusement, un protocole de chiffrement, comme IPsec (« Internet Protocol Security ») peut être utilisé pour la communication sur la liaison tunnel.

L'identifiant « Neighbor GRE Address » est l'identifiant virtuel « GRE Address » attribué au routeur distant avec lequel la jonction est établie. Alternativement il pourrait s'agir de l'identifiant physique « IP Address » du routeur distant.

L'identifiant « Neighbor BGP AS ID » est l'identifiant BGP AS ID attribué au routeur distant.

On constate par conséquent que, pour l'élaboration des fichiers de configuration d'une jonction via laquelle est établi un voisinage BGP, un opérateur doit notamment affecter une adresse physique (adresse IP) et éventuellement une adresse virtuelle (adresse GRE) au routeur qu'il gère, en plus d'autres paramètres BGP spécifiques, comme par exemple un mot de passe d'appariement (« peering »).

Les adresses IP des deux routeurs d'extrémité de la jonction doivent être sur la même plage d'adresses pour permettre aux équipements de communiquer entre eux (par exemple 200.53.1.1 et 200.53.1.2 sur la figure 1),

Les identifiants BGP sont échangés en amont de la préparation de la jonction, ce qui permet de déterminer quel opérateur définira l'adressage.

Souvent, parmi les deux opérateurs, c'est l'opérateur ayant le préfixe d'identifiant BGP le plus élevé qui prend conventionnellement l'ascendant et définit les adresses IP et GRE non seulement de la machine qu'il gère, mais également de la machine distante, avant de communiquer les identifiants choisis à l'autre opérateur. C'est ce que l'on peut observer sur la figure 1, où l'opérateur du domaine 10 (dont le préfixe 53 est supérieur au préfixe 44 de l'opérateur du domaine 1) sélectionne, dans les plages d'adresses IP et GRE réservées, des adresses pour l'interface 14 (IP : 200.53.1.2 ; GRE : 201.53.1.2) et des adresses pour l'interface 13 (IP : 200.53.1.1 ; GRE : 201.53.1.1).

Le même processus est mis en oeuvre pour la configuration des jonctions 21 et 31 et la détermination des informations contenues dans les fichiers de configuration 6 et 26 pour la jonction 21 et 6 et 36 pour la jonction 31.

On comprend par conséquent que l'élaboration manuelle des fichiers de configuration des interfaces d'une jonction entre routeurs de bordure BGP soit une source d'erreurs.

Le but de la présente invention est de résoudre ce problème en proposant un procédé d'autoconfiguration de chaque interface d'une jonction BGP.

Pour cela l'invention a pour objet un procédé de configuration d'une jonction pour un routage conforme au protocole de passerelle de bordure - BGP d'un réseau de communication IP, la jonction, via laquelle est établi un voisinage BGP, s'étendant entre une interface locale d'un routeur de bordure local d'un domaine de routage local et une interface distante d'un routeur de bordure distant d'un domaine de routage distant, comportant les étapes de : prédéfinition d'un fichier de configuration « bas » et d'un fichier de configuration « haut » ; comparaison entre un niveau hiérarchique du routeur local et un niveau hiérarchique du routeur distant ; et, si le routeur local possède le niveau hiérarchique le plus bas et le routeur distant possède le niveau hiérarchique le plus haut, configuration de l'interface locale avec le fichier de configuration « bas » et l'interface distante avec le fichier de configuration « haut », et si le routeur local possède le niveau hiérarchique le plus haut et le routeur distant possède le niveau hiérarchique le plus bas, configuration de l'interface locale avec le fichier de configuration « haut » et l'interface distante avec le fichier de configuration « bas ».

Suivant des modes particuliers de réalisation, le procédé comporte une ou plusieurs des caractéristiques suivantes, prises isolément ou suivant toutes les combinaisons techniquement possibles :
- chaque fichier de configuration parmi les fichiers de configuration « haut » et « bas » permet de configurer l'interface locale en attribuant au routeur de bordure local une valeur par défaut à un identifiant BGP simulé, dénommé « FAKED BGP AS ID », et en attribuant au routeur de bordure distant une valeur par défaut à un identifiant BGP simulé, dénommé « Neighbor BGP AS ID .
- chaque fichier de configuration parmi les fichiers de configuration « haut » et « bas » permet de configurer l'interface locale en attribuant une valeur par défaut à un identifiant physique, et éventuellement un identifiant virtuel, du routeur de bordure local et une valeur par défaut à un identifiant physique, et éventuellement un identifiant virtuel, du routeur de bordure distant.
- un identifiant physique d'un routeur de bordure, local ou distant, est une adresse IP, dénommée « IP Address », et une adresse virtuelle du routeur de bordure local est une adresse GRE, dénommée « GRE Address ».
- le fichier de configuration « bas », F1, et le fichier de configuration « haut », F2, sont prédéfinis avec les valeurs suivantes :

| F1 : | |
|---|---|
| | FAKED BGP AS ID : 200.1 |
| | IP Address : 200.0.0.1 |
| | GRE Address : 201.0.0.1 |
| | Neighbor GRE Address : 201.0.0.2 |
| | Neighbor BGP AS ID : 200.2 |

| F2 : | |
|---|---|
| | FAKED BGP AS ID : 200.2 |
| | IP Address : 200.0.0.2 |
| | GRE Address : 201.0.0.2 |
| | Neighbor GRE Address : 201.0.0.1 |
| | Neighbor BGP AS ID : 200.1 |

- le niveau hiérarchique de chaque routeur de bordure est donné par un préfixe d'un identifiant BGP véritable, dénommé « REAL BGP AS ID », préalablement attribué audit routeur de bordure.
- chaque interface de la jonction est associée à une unique table de routage virtuelle et est identifiée par un paramètre de distinction de route - RD identifiant ladite table de routage virtuelle, ledit paramètre de distinction de route - RD étant repris dans le routage conforme au protocole de passerelle de bordure - BGP.
- chacune des tables de routage virtuelles associées aux interfaces d'un même routeur de bordure est identifiée par des paramètres de routes cibles exportées et importées - ERT / IRT qui sont communs audites tables de routages virtuelles, afin de réaliser une fuite entre les tables de routage virtuelles dudit routeur de bordure.
- une fonction de prévention du bouclage prévue par le protocole de routage conforme au protocole de passerelle de bordure - BGP est désactivée.
- une table de routage globale maintenue à jour par le routeur de bordure local pour identifier l'interface locale vers laquelle router un flux de données comporte des champs correspondant, pour chaque interface locale, à : un paramètre de distinction de route - RD, qui permet d'identifier ladite interface locale sur le routeur de bordure local ; deux paramètres de routes cibles exportées et importées - ERT et IRT, qui sont identiques pour toutes les interfaces locales du routeur de bordure local ; une adresse IP correspondant à l'adresse du réseau/domaine à atteindre ; une adresse physique du routeur de bordure distant atteignable par la jonction issue de ladite interface locale ; des identifiants BGP véritable et simulé pour ladite interface locale ; et, des identifiants BGP véritable et simulé pour l'interface distante connectée par la jonction issue de ladite interface locale.
- les champs correspondant au paramètre de distinction de route identifiant une interface locale, aux identifiants BGP véritable et simulé de ladite interface locale, et aux identifiants BGP véritable et simulé pour l'interface distante connectée par la jonction issue de ladite interface locale sont propagés par le routage BGP.

L'invention a également pour objet un routeur de bordure d'un réseau de communication IP, le routeur de bordure mettant en oeuvre un routage conforme au protocole de passerelle de bordure - BGP, le routeur de bordure comportant une interface locale d'une jonction portant un voisinage BGP, la jonction ayant une interface distante sur un routeur de bordure distant, l'interface locale étant configurée par la mise en oeuvre du procédé de configuration précédant.

L'invention et ses avantages seront mieux compris à la lecture de la description détaillée qui va suivre d'un mode de réalisation particulier, donné uniquement à titre d'exemple non limitatif, cette description étant faite en se référant aux dessins annexés sur lesquels :
[Fig 1] La figure 1 est une représentation schématique d'un réseau IP selon l'état de la technique ;
[Fig 2] La figure 2 est une représentation schématique d'un réseau IP mettant en oeuvre le procédé de configuration selon l'invention ; et,
[Fig 3] La figure 3 est une représentation schématique, sous forme de blocs, du procédé de configuration selon l'invention.

De manière générale, l'invention propose de prédéfinir deux fichiers de configuration possibles (respectivement un fichier de configuration « haut » et un fichier de configuration « bas ») et une précédence hiérarchique entre opérateurs. De la sorte, au moment de la configuration d'une jonction entre des premier et second routeurs de bordure BGP, l'opérateur ayant le niveau hiérarchique le plus bas n'a plus qu'à sélectionner le fichier « bas » pour configurer l'interface du routeur de bordure qu'il gère et l'opérateur ayant le niveau hiérarchique le plus haut n'a plus qu'à sélectionner le fichier « haut » pour configurer l'interface du routeur de bordure qu'il gère.

Avec l'invention, il n'y a donc plus besoin d'une communication entre les deux opérateurs, si ce n'est pour comparer leurs niveaux hiérarchiques respectifs. Il n'y a plus besoin de préparer des fichiers de configuration spécifiques à chaque jonction.

Avantageusement, dans une variante où le montage d'une jonction serait automatisé de manière à éviter toute intervention humaine, une fois la liaison physique établie entre les premier et second routeurs de bordure, ces derniers négocient directement pour déterminer le routeur de niveau hiérarchique le plus haut, et, en fonction du résultat de cette comparaison, chargent le fichier de configuration adapté parmi les deux fichiers de configuration possibles.

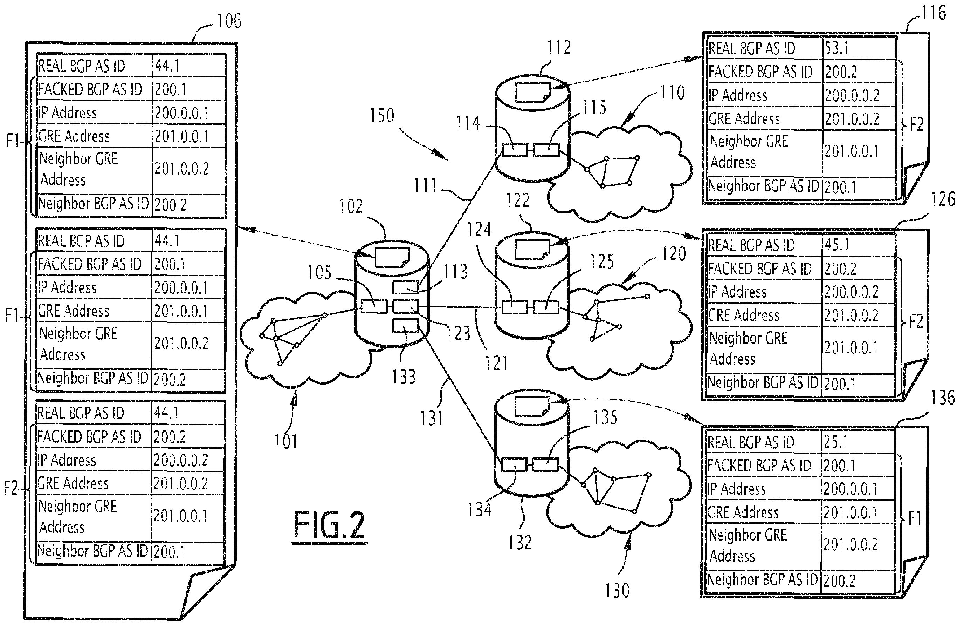

La figure 2 est une représentation schématique d'un réseau de communication IP 150 mettant en oeuvre l'invention.

Un élément de la figure 2 identique ou similaire à un élément de la figure 1 est identifié par un chiffre de référence augmenté d'une centaine par rapport au chiffre de référence utilisé sur la figure 1 pour identifier cet élément identique ou similaire.

Dans un mode de réalisation particulier, le fichier de configuration « bas », F1, et le fichier de configuration « haut », F2, sont prédéfinis avec les valeurs suivantes :

| F1 : | |
|---|---|
| | FAKED BGP AS ID : 200.1 |
| | IP Address : 200.0.0.1 |
| | GRE Address : 201.0.0.1 |
| | Neighbor GRE Address : 201.0.0.2 |
| | Neighbor BGP AS ID : 200.2 |

| F2 : | |
|---|---|
| | FAKED BGP AS ID : 200.2 |
| | IP Address : 200.0.0.2 |
| | GRE Address : 201.0.0.2 |
| | Neighbor GRE Address : 201.0.0.1 |
| | Neighbor BGP AS ID : 200.1 |

La précédence hiérarchique entre opérateurs est par exemple et de préférence fondée sur les préfixes d'identifiants BGP dits véritables, « REAL BGP AS ID », qui sont attribués conventionnellement et préalablement aux différents opérateurs susceptibles d'intervenir sur le réseau de communication IP 150.

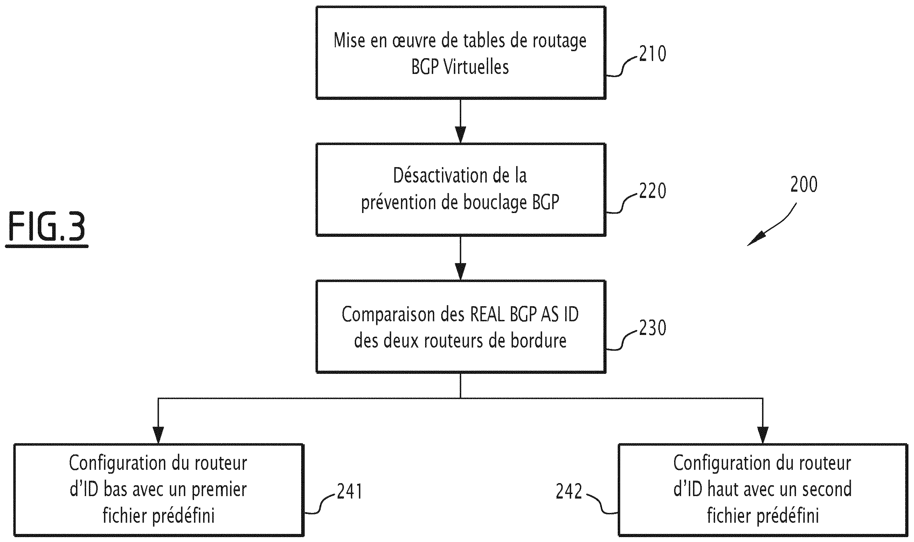

Ainsi par exemple, comme illustré par le procédé de configuration 200 de la figure 3, pour la configuration par exemple de la jonction 111 entre le routeur 102 (REAL BGP AS ID = 44.1) et le routeur 112 (REAL BGP AS ID = 53.1), une étape 230 est mise en oeuvre au cours de laquelle l'opérateur du domaine 101 et l'opérateur du domaine 110 échangent les identifiants « REAL BGP AS ID » des routeurs concernés pour déterminer, sur la base des préfixes des identifiants BGP échangés, l'opérateur ayant le niveau hiérarchique le plus bas et celui ayant le niveau hiérarchique le plus haut. Dans l'exemple de la figure 2, « 53 » étant supérieur à « 44 », c'est l'opérateur du domaine 101 qui a le niveau hiérarchique le plus bas et l'opérateur du domaine 110 qui a le niveau hiérarchique le plus haut.

En conséquence, à l'étape 241, l'opérateur de niveau le plus bas utilise le fichier « bas » F1 comme fichier de configuration de l'interface du routeur qu'il gère et, parallèlement et indépendamment, à l'étape 242, l'opérateur de niveau le plus haut utilise le fichier « haut » F2 comme fichier de configuration de l'interface du routeur qu'il gère.

Ainsi, l'opérateur du domaine 101 utilise le fichier F1 pour configurer la première interface 113 côté routeur 102 et l'opérateur du domaine 110 utilise le fichier F2 pour configurer la première interface 114 côté routeur 112.

De manière similaire, pour monter la jonction 121, le préfixe « 45 » étant supérieur au préfixe « 44 », l'opérateur du domaine 101 utilise le fichier F1 pour configurer la seconde interface 123 côté routeur 102 et l'opérateur du domaine 120 utilise le fichier F2 pour configurer la seconde interface 124 côté routeur 112.

Et, pour monter la jonction 131, le préfixe « 44 » étant supérieur au préfixe « 25 », l'opérateur du domaine 101 utilise le fichier F2 pour configurer la troisième interface 123 côté routeur 102 et l'opérateur du domaine 130 utilise le fichier F1 pour configurer la troisième interface 134 côté routeur 112.

Cependant, pour pouvoir utiliser ces deux seuls fichiers pour configurer les interfaces d'une jonction entre routeurs de bordure mettant en oeuvre un routage BGP, le réseau de communication IP doit être modifié comme cela va maintenant être présenté.

Comme on peut le constater pour le routeur 102 de la figure 2, les première et seconde interfaces 113 et 123 possèdent les mêmes adresses IP (et GRE).

Par conception, il est impossible d'avoir, sur un même équipement, plusieurs interfaces ayant les mêmes adresses IP (et GRE). En effet, il est impossible d'insérer plusieurs fois les mêmes adresses IP dans une table de routage, en l'occurrence une table de routage BGP. /

Comme le besoin de pouvoir configurer plusieurs jonctions sur un même routeur de bordure est fort, pour pouvoir utiliser les deux seuls fichiers de configuration indiqués ci-dessus, il est avantageux de mettre en oeuvre des tables de routage virtuelles - VRF (« Virtual Routing and Forwarding ») et de renseigner chaque table avec des informations de routage BGP adaptées.

Selon l'invention, une table VRF pour le routage BGP est associée à chaque interface d'un routeur de bordure, cette interface constituant l'extrémité locale d'une jonction établissant un voisinage BGP avec une interface distante d'un routeur de bordure distant.

Si la définition d'une table VRF n'est pas couverte par une norme particulière, l'emploi de tables VRF est largement répandu chez les équipementiers et dans les logiciels réseaux. De manière connue, une table VRF est identifiée par trois paramètres:
- un paramètre de distinction de route - RD (« Route Distinguisher ») : cette information, qui est spécifique d'une table VRF, permet par conséquent d'identifier de façon unique les routes contenues dans une table VRF particulière.
- deux paramètres de routes cibles exportées et importées - ERT et IRT (« Export et Import Route Target ») : il s'agit d'informations associées à chaque préfixe d'une table VRF pour segmenter et orienter les flux. Lorsque les mêmes paramètres ERT/IRT sont définis sur deux tables VRF différentes, cela permet un import/export des routes correspondantes entre ces deux tables VRF et de créer des plans de routage entre ces VRF.

Un routeur de bordure BGP tient à jour une table de routage globale qui regroupe notamment l'ensemble des tables VRF pour le routage BGP.

Cette table de routage globale comporte notamment les champs suivants :
- un paramètre de distinction de route - RD, qui permet d'identifier chaque table VRF et par conséquent chaque interface locale du routeur de bordure ;
- deux paramètres de routes cibles exportées et importées - ERT et IRT, identiques pour toutes les tables VRF du routeur de bordure ;
- une adresse IP correspondant à l'adresse du réseau/domaine à atteindre ;
- une adresse IP du prochain saut (« next hop »), indiquant l'adresse IP (et/ou l'adresse GRE) du routeur distant atteignable par la jonction issue de l'interface locale associée à une table VRF ;
- des identifiants BGP véritable et simulé pour l'interface locale associée à une table VRF ; et,
- des identifiants BGP véritable et simulé pour l'interface distante connectée par la jonction issue de l'interface locale associée à une table VRF.

Les fichiers F1 et F2 permettent d'initialiser les champs d'une table VRF d'un routeur de bordure. L'interface associée à cette table VRF hérite ensuite des valeurs des champs de cette table VRF.

Par ailleurs, chaque table VRF contient un champ de préfixe pour chaque route BGP contenue dans cette table VRF. Cela permet de filtrer le préfixe de l'adresse IP de destination mentionnée dans l'en-tête d'un paquet IP entrant de manière à lui attribuer une route particulière. Ainsi, un routeur de bordure oriente un paquet IP d'un flux de données en fonction du domaine à atteindre, identifié dans l'en-tête du paquet IP.

Les champs d'identifiants BGP véritable et simulé du serveur de bordure local et du serveur de bordure distant, ainsi que l'identifiant RD de l'interface locale par laquelle faire transiter un paquet IP définissent un chemin (« path »). Les valeurs de ces champs de « chemin » sont redistribuées par le routage BGP, en les ajoutant dans l'en-tête du paquet IP retransmis.

Ainsi, une interface peut être identifiée parmi l'ensemble des interfaces présentes sur un serveur de bordure au moyen du paramètre de distinction de route - RD de la table virtuelle - VRF qui lui est associée. Par conséquent, plusieurs interfaces d'un même routeur de bordure associées chacune à des tables VRF différentes peuvent avoir les mêmes adresses IP (et GRE), dans la mesure où elles peuvent être distinguées par leur identifiant RD.

La mise en oeuvre de tables VRF établit normalement un cloisonnement des flux de données qui est trop fort au sens où l'on crée des plans de routage étanches les uns des autres au sein du réseau IP (segmentation).

Selon l'invention, on autorise une « fuite des tables VRF » (« VRF leaking » en anglais), en attribuant les mêmes paramètres ERT et IRT pour les différentes tables VRF de routage BGP. Cela conduit à permettre le transit de flux de données entre interfaces d'un même routeur de bordure, alors que l'utilisation de tables VRF devrait normalement assurer une étanchéité entre plans de routage.

Ainsi, il est possible de configurer plusieurs interfaces ayant des adressages IP et GRE identiques sur un même routeur tout en permettant le transit des flux de données sur ces interfaces, sans segmentation.

Par ailleurs, un procédé de configuration efficace d'une interface d'un routeur de bordure doit permettre de définir le champ indiquant l'identifiant BGP du routeur de bordure distant. Dans l'état de la technique, la communication entre opérateurs permet l'échange de la valeur de cet identifiant BGP, mais avec des risques d'erreur de reprise dans le fichier de configuration.

Or, le protocole BGP définit une fonctionnalité permettant à un équipement de simuler un identifiant BGP (dénommé ici « FAKED BGP AS IP ») différent de son identifiant BGP véritable (dénommé ici « REAL BGP AS IP »). Cette fonctionnalité standard permet notamment de ne pas avoir à réorganiser les voisinages BGP entre routeurs de bordure, par exemple lors du changement d'identifiant BGP d'un sous-domaine donné auquel appartient le routeur de bordure considéré (tous les routeurs d'un sous-domaine ayant le même identifiant BGP, lorsque cet identifiant BGP change, un routeur peut simuler ne pas avoir changé d'identifiant BGP pour ne pas rendre inopérant son voisinage BGP avec des routeurs d'autres domaines ou sous-domaines qui n'auraient pas connaissance du nouvel identifiant BGP).

Ainsi, selon l'invention, chaque fichier de configuration permet d'attribuer une valeur par défaut à l'identifiant BGP simulé.

Dans l'exemple précédent, le FAKED BGP AS ID prend la valeur « 200.1 » pour le fichier « bas », F1, et la valeur « 200.2 » pour le fichier « haut », F2.

Cependant, cela implique que plusieurs équipements possèdent le même identifiant BGP simulé.

Pour le routage BGP, l'identifiant BGP simulé, FAKED BGP AS ID, est alors ajouté, en plus de l'identifiant BGP véritable, REAL BGP AS ID, aux champs BGP redistribués par le protocole BGP entre les routeurs de bordure.

Néanmoins, que plusieurs équipements possèdent le même identifiant BGP simulé présente un inconvénient majeur : un routeur, comme le routeur 101, comporte dans son voisinage deux routeurs, en l'occurrence 110 et 120, qui possèdent le même identifiant BGP simulé, ici « 200.2 ». Par ailleurs, un routeur, comme le routeur 101, peut se retrouver avec le même identifiant BGP simulé que l'un de ses voisins, comme par exemple la valeur « 200.1 » qui est commune au routeur 102 pour les jonctions 11 et 121, et au routeur 132, pour la jonction 131.

En toute logique, deux voisins avec le même identifiant BGP sont censés être dans le même domaine. En conséquence, le protocole BGP inclut une fonction de sécurité fondamentale de prévention du bouclage (« BGP Loop Prévention System ») normalement activée pour interdire la redistribution des informations de routage BGP dans le même domaine de routage. En effet, si deux équipements sont dans le même domaine de routage, d'une part, ils connaissent forcément les mêmes préfixes BGP, et d'autre part, une redistribution des préfixes BGP pourrait créer des boucles dans lesquelles la redistribution perpétuelle de préfixes BGP déjà connus finirait par surcharger le réseau.

Avec les deux fichiers de configuration selon l'invention, si des voisins BGP sont dans le même domaine de routage simulé (les routeurs possèdent les mêmes identifiants BGP simulés), ils ne sont pas dans le même domaine de routage réel (les routeurs possèdent des identifiants BGP véritables différents). La prévention du bouclage prévue par le protocole peut ainsi être désactivée sans risque, via une commande spécifique prévue par le protocole de routage BGP.

Fort de ces explications, comme illustré sur la figure 3, le procédé de configuration 200 comporte une première étape 210 de mise en oeuvre de tables de routage virtuelle. Pour cela une unique table VRF est associée à chaque interface d'un routeur de bordure BGP.

Le procédé de configuration 200 comporte une seconde étape 220 de désactivation de la fonction de prévention du bouclage BGP.

Puis, les étapes 230, 241 et 242 peuvent être mise en oeuvre à chaque fois qu'une nouvelle jonction est à configurer.

## Revendications

1. Procédé de configuration d'une jonction (111) pour un routage conforme au protocole de passerelle de bordure - BGP d'un réseau de communication IP (150), la jonction, via laquelle est établi un voisinage BGP, s'étendant entre une interface locale (113) d'un routeur de bordure local (102) d'un domaine de routage local (101) et une interface distante (114) d'un routeur de bordure distant (112) d'un domaine de routage distant (110), le procédé étant **caractérisé en ce qu'**il comporte les étapes de :
- Prédéfinition d'un fichier de configuration « bas » (F1) et d'un fichier de configuration « haut » (F2);
- Comparaison entre un niveau hiérarchique du routeur local (102) et un niveau hiérarchique du routeur distant (112); et,
- Si le routeur local possède le niveau hiérarchique le plus bas et le routeur distant possède le niveau hiérarchique le plus haut, configuration de l'interface locale avec le fichier de configuration « bas » et l'interface distante avec le fichier de configuration « haut », et
- Si le routeur local possède le niveau hiérarchique le plus haut et le routeur distant possède le niveau hiérarchique le plus bas, configuration de l'interface locale avec le fichier de configuration « haut » et l'interface distante avec le fichier de configuration « bas ».

2. Procédé selon la revendication 1, dans lequel chaque fichier de configuration parmi les fichiers de configuration « haut » (F2) et « bas » (F1) permet de configurer l'interface locale (113) en attribuant au routeur de bordure local (102) une valeur par défaut à un identifiant BGP simulé, dénommé « FAKED BGP AS ID », et en attribuant au routeur de bordure distant (112) une valeur par défaut à un identifiant BGP simulé, dénommé « Neighbor BGP AS ID .

3. Procédé selon la revendication 2, dans lequel chaque fichier de configuration parmi les fichiers de configuration « haut » (F2) et « bas » (F1) permet de configurer l'interface locale (113) en attribuant une valeur par défaut à un identifiant physique, et éventuellement un identifiant virtuel, du routeur de bordure local (102) et une valeur par défaut à un identifiant physique, et éventuellement un identifiant virtuel, du routeur de bordure distant (112).

4. Procédé selon la revendication 3, dans lequel un identifiant physique d'un routeur de bordure, local ou distant, est une adresse IP, dénommée « IP Address », et une adresse virtuelle du routeur de bordure local est une adresse GRE, dénommée « GRE Address ».

5. Procédé selon la revendication 4, dans lequel le fichier de configuration « bas », F1, et le fichier de configuration « haut », F2, sont prédéfinis avec les valeurs suivantes :
| F1 : | |
|---|---|
| | FAKED BGP AS ID : 200.1 |
| | IP Address : 200.0.0.1 |
| | GRE Address : 201.0.0.1 |
| | Neighbor GRE Address : 201.0.0.2 |
| | Neighbor BGP AS ID : 200.2 |
| F2 : | |
|---|---|
| | FAKED BGP AS ID : 200.2 |
| | IP Address : 200.0.0.2 |
| | GRE Address : 201.0.0.2 |
| | Neighbor GRE Address : 201.0.0.1 |
| | Neighbor BGP AS ID : 200.1 |

6. Procédé selon l'une quelconque des revendications précédentes, dans lequel le niveau hiérarchique de chaque routeur de bordure local et distant est donné par un préfixe d'un identifiant BGP véritable, dénommé « REAL BGP AS ID », préalablement attribué audit routeur de bordure local ou distant.

7. Procédé selon l'une quelconque des revendications précédentes, dans lequel chaque interface (113, 114) de la jonction (111) est associée à une unique table de routage virtuelle et est identifiée par un paramètre de distinction de route - RD identifiant ladite table de routage virtuelle, ledit paramètre de distinction de route - RD étant repris dans le routage conforme au protocole de passerelle de bordure - BGP.

8. Procédé selon la revendication 7, dans lequel chacune des tables de routage virtuelles associées aux interfaces d'un même routeur de bordure est identifiée par des paramètres de routes cibles exportées et importées - ERT / IRT, qui sont communs audites tables de routages virtuelles, afin de réaliser une fuite entre les tables de routage virtuelles dudit routeur de bordure.

9. Procédé selon l'une quelconque des revendications précédentes, dans lequel une fonction de prévention du bouclage prévue par le protocole de routage conforme au protocole de passerelle de bordure - BGP est désactivée.

10. Procédé selon l'une quelconque des revendications précédentes, dans lequel une table de routage globale maintenue à jour par le routeur de bordure local (102) pour identifier l'interface locale (113) vers laquelle router un flux de données comporte des champs correspondant, pour chaque interface locale, à :
- un paramètre de distinction de route - RD, qui permet d'identifier ladite interface locale sur le routeur de bordure local ;
- deux paramètres de routes cibles exportées et importées - ERT et IRT, qui sont identiques pour toutes les interfaces locales du routeur de bordure local ;
- une adresse IP correspondant à l'adresse du réseau/domaine à atteindre ;
- une adresse physique du routeur de bordure distant atteignable par la jonction issue de ladite interface locale ;
- des identifiants BGP véritable et simulé pour ladite interface locale ; et,
- des identifiants BGP véritable et simulé pour l'interface distante connectée par la jonction issue de ladite interface locale.

11. Procédé selon la revendication 10, selon lequel les champs correspondant au paramètre de distinction de route identifiant une interface locale, aux identifiants BGP véritable et simulé de ladite interface locale, et aux identifiants BGP véritable et simulé pour l'interface distante connectée par la jonction issue de ladite interface locale sont propagés par le routage BGP.

12. Routeur de bordure (102) d'un réseau de communication IP (150), le routeur de bordure mettant en oeuvre un routage conforme au protocole de passerelle de bordure - BGP, le routeur de bordure comportant une interface locale (113) d'une jonction (111) portant un voisinage BGP, la jonction ayant une interface distante (114) sur un routeur de bordure distant (112), l'interface locale étant configurée par la mise en oeuvre du procédé de configuration selon l'une quelconque des revendications précédentes.

## Patentansprüche

1. Verfahren zur Konfiguration einer Verbindungsstelle (111) für ein Routing gemäß dem Border Gateway Protokoll - BGP eines IP-Kommunikationsnetzes (150), wobei sich die Verbindungsstelle, über die eine BGP-Nachbarschaft aufgebaut wird, zwischen einer lokalen Schnittstelle (113) eines lokalen Border-Routers (102) einer lokalen Routing-Domäne (101) und einer entfernten Schnittstelle (114) eines entfernten Border-Routers (112) einer entfernten Routing-Domäne (110) erstreckt, wobei das Verfahren **dadurch gekennzeichnet ist, dass** es die folgenden Schritte umfasst:
- Voreinstellung einer "niedrigen" Konfigurationsdatei (F1) und einer "hohen" Konfigurationsdatei (F2);
- Vergleich zwischen einer hierarchischen Ebene des lokalen Routers (102) und einer hierarchischen Ebene des entfernten Routers (112); und,
- wenn der lokale Router die niedrigste hierarchische Ebene und der entfernte Router die höchste hierarchische Ebene besitzt, Konfiguration der lokalen Schnittstelle mit der "niedrigen" Konfigurationsdatei und der entfernten Schnittstelle mit der "hohen" Konfigurationsdatei, und
- wenn der lokale Router die höchste hierarchische Ebene und der entfernte Router die niedrigste hierarchische Ebene besitzt, Konfiguration der lokalen Schnittstelle mit der "hohen" Konfigurationsdatei und der entfernten Schnittstelle mit der "niedrigen" Konfigurationsdatei.

2. Verfahren nach Anspruch 1, wobei jede Konfigurationsdatei von der "hohen" (F2) und "niedrigen" (F1) Konfigurationsdatei gestattet, die lokale Schnittstelle (113) zu konfigurieren, indem dem lokalen Border-Router (102) ein Standardwert für eine simulierte BGP-Kennung, bezeichnet als "FAKED BGP AS ID", zugewiesen wird, und indem dem entfernten Border-Router (112) ein Standardwert für eine simulierte BGP-Kennung, bezeichnet als "Neighbor BGP AS ID, zugewiesen wird.

3. Verfahren nach Anspruch 2, wobei jede Konfigurationsdatei von der "hohen" (F2) und "niedrigen" (F1) Konfigurationsdatei gestattet, die lokale Schnittstelle (113) zu konfigurieren, indem einer physischen Kennung und möglicherweise einer virtuellen Kennung des lokalen Border-Routers (102) ein Standardwert zugewiesen wird und einer physischen Kennung und möglicherweise einer virtuellen Kennung des entfernten Border-Routers (112) ein Standardwert zugwiesen wird.

4. Verfahren nach Anspruch 3, wobei eine physische Kennung eines lokalen oder entfernten Border-Routers eine IP-Adresse, bezeichnet als "IP Address", ist, und eine virtuelle Adresse des lokalen Border-Routers eine GRE-Adresse, bezeichnet als "GRE Address", ist.

5. Verfahren nach Anspruch 4, wobei die "niedrige" Konfigurationsdatei F1 und die "hohe" Konfigurationsdatei F2 mit den folgenden Werten voreingestellt werden:
| F1: | |
|---|---|
| | FAKED BGP AS ID: 200.1 |
| | IP Address: 200.0.0.1 |
| | GRE Address: 201.0.0.1 |
| | Neighbor GRE Address: 201.0.0.2 |
| | Neighbor BGP AS ID: 200.2 |
| F2: | |
|---|---|
| | FAKED BGP AS ID: 200.2 |
| | IP Address: 200.0.0.2 |
| | GRE Address: 201.0.0.2 |
| | Neighbor GRE Address: 201.0.0.1 |
| | Neighbor BGP AS ID: 200.1 |

6. Verfahren nach einem der vorhergehenden Ansprüche, wobei die hierarchische Ebene jedes lokalen und entfernten Border-Routers durch ein Präfix einer echten BGP-Kennung, genannt "REAL BGP AS ID", gegeben ist, das zuvor dem lokalen oder entfernten Border-Router zugewiesen wurde.

7. Verfahren nach einem der vorhergehenden Ansprüche, wobei jede Schnittstelle (113, 114) der Verbindungsstelle (111) mit einer einzigen virtuellen Routingtabelle verbunden ist und durch einen Route Distinguisher Parameter - RD identifiziert wird, der die virtuelle Routingtabelle identifiziert, wobei der Route Distinguisher Parameter - RD in das Routing gemäß dem Border Gateway Protocol - BGP übernommen wird.

8. Verfahren nach Anspruch 7, wobei jede der virtuellen Routingtabellen, die mit den Schnittstellen desselben Border-Routers verbunden sind, durch exportierte und importierte Zielroutenparameter - ERT / IRT identifiziert wird, die den virtuellen Routingtabellen gemeinsam sind, um ein Leck zwischen den virtuellen Routingtabellen des Border-Routers zu realisieren.

9. Verfahren nach einem der vorhergehenden Ansprüche, wobei eine Funktion zur Vorbeugung von Schleifenbildung, die vom Routing-Protokoll entsprechend dem Border Gateway Protocol - BGP vorgesehen ist, deaktiviert wird.

10. Verfahren nach einem der vorhergehenden Ansprüche, wobei eine globale Routingtabelle, die vom lokalen Border-Router (102) aktuell gehalten wird, um die lokale Schnittstelle (113) zu identifizieren, zu der ein Datenstrom geroutet wird, Felder enthält, die für jede lokale Schnittstelle entsprechen:
- einem Route Distinguisher Parameter - RD, der gestattet, die lokale Schnittstelle auf dem lokalen Border-Router zu identifizieren;
- zwei exportierten und importierten Zielroutenparametern - ERT und IRT, die für alle lokalen Schnittstellen des lokalen Border-Routers identisch sind;
- einer IP-Adresse, die der Adresse des zu erreichenden Netzwerks/der zu erreichenden Domäne entspricht;
- einer physikalischen Adresse des entfernten Border-Routers, die durch die von der lokalen Schnittstelle ausgehende Verbindungsstelle erreichbar ist;
- einer echten und simulierten BGP-Kennung für die lokale Schnittstelle; und
- einer echten und simulierten BGP-Kennung für die entfernte Schnittstelle, die durch die von der lokalen Schnittstelle ausgehende Verbindungsstelle verbunden ist.

11. Verfahren nach Anspruch 10, wobei die Felder, die dem Route Distinguisher Parameter, der eine lokale Schnittstelle identifiziert, einer echten und simulierten BGP-Kennung der lokalen Schnittstelle und einer echten und simulierten BGP-Kennung für die entfernte Schnittstelle, die durch die von der lokalen Schnittstelle ausgehende Verbindungsstelle verbunden ist, entsprechen, durch das BGP-Routing verbreitet werden.

12. Border-Router (102) eines IP-Kommunikationsnetzes (150), wobei der Border-Router ein Routing gemäß dem Border Gateway Protokoll - BGP durchführt, wobei der Border-Router eine lokale Schnittstelle (113) einer Verbindungsstelle (111) aufweist, die eine BGP-Nachbarschaft trägt, wobei die Verbindungsstelle eine entfernte Schnittstelle (114) zu einem entfernten Border-Router (112) aufweist, wobei die lokale Schnittstelle durch die Durchführung des Konfigurationsverfahrens nach einem der vorhergehenden Ansprüche konfiguriert wird.

## Claims

1. A method of configuring a trunk (111) for a Border Gateway Protocol - BGP compliant routing of an IP communications network (150), the trunk, via which a BGP neighbourhood is established, extending between a local interface (113) of a local edge router (102) of a local routing domain (101) and a remote interface (114) of a remote edge router (112) of a remote routing domain (110), the method being **characterised in that** it comprises the following steps:
- Pre-definition of a "low" configuration file (F1) and a "high" configuration file (F2);
- Comparison between a hierarchical level of the local router (102) and a hierarchical level of the remote router (112); and,
- If the local router has the lowest hierarchical level and the remote router has the highest hierarchical level, configure the local interface with the "low" configuration file and the remote interface with the "high" configuration file, and
- If the local router has the highest hierarchical level and the remote router has the lowest hierarchical level, configure the local interface with the "high" configuration file and the remote interface with the "low" configuration file.

2. A method according to claim 1, wherein each of the "high" (F2) and "low" (F1) configuration files enables the local interface (113) to be configured by assigning to the local edge router (102) a default value to a simulated BGP identifier, referred to as "FAKED BGP AS ID", and by assigning to the remote edge router (112) a default value to a simulated BGP identifier, referred to as a "Neighbor BGP AS ID.

3. A method according to claim 2, in which each configuration file among the "high" (F2) and "low" (F1) configuration files makes it possible to configure the local interface (113) by assigning a default value to a physical identifier, and optionally a virtual identifier, of the local edge router (102) and a default value to a physical identifier, and optionally a virtual identifier, of the remote edge router (112).

4. A method according to claim 3, wherein a physical identifier of a local or remote edge router is an IP address and a virtual address of the local edge router is a GRE address.

5. A method according to claim 4, in which the "low" configuration file, F1, and the "high" configuration file, F2, are predefined with the following values:
| F1: | |
|---|---|
| | |
| | FAKED BGP AS ID: 200.1 |
| | IP Address: 200.0.0.1 |
| | GRE Address: 201.0.0.1 |
| | Neighbor GRE Address: 201.0.0.2 |
| | Neighbor BGP AS ID: 200.2 |
| F2: | |
|---|---|
| | FAKED BGP AS ID: 200.2 |
| | IP Address: 200.0.0.2 |
| | GRE Address: 201.0.0.2 |
| | Neighbor GRE Address: 201.0.0.1 |
| | Neighbor BGP AS ID: 200.1 |

6. A method according to any one of the preceding claims, in which the hierarchical level of each local and remote edge router is given by a prefix of a real BGP identifier, called "REAL BGP AS ID", previously assigned to said local or remote edge router.

7. A method according to any one of the preceding claims, in which each interface (113, 114) of the junction (111) is associated with a single virtual routing table and is identified by a route distinction parameter - RD identifying said virtual routing table, said route distinction parameter - RD being taken up in routing in accordance with the Border Gateway Protocol - BGP.

8. A method according to claim 7, in which each of the virtual routing tables associated with the interfaces of a single edge router is identified by exported and imported target route parameters - ERT / IRT, which are common to the said virtual routing tables, in order to achieve a leakage between the virtual routing tables of the said edge router.

9. A method according to any of the preceding claims, wherein a loopback prevention function provided by the Border Gateway Protocol - BGP compliant routing protocol is disabled.

10. A method according to any one of the preceding claims, wherein a global routing table maintained by the local edge router (102) to identify the local interface (113) to the router of which a data stream includes fields corresponding, for each local interface, to:
- a route distinction parameter - RD, which identifies said local interface on the local edge router;
- two exported and imported target route parameters - ERT and IRT, which are identical for all local interfaces on the local edge router;
- an IP address corresponding to the address of the network/domain to be reached;
- a physical address of the remote edge router that can be reached by the junction coming from said local interface;
- true and simulated BGP identifiers for said local interface; and
- true and simulated BGP identifiers for the remote interface connected by the junction from said local interface.

11. A method according to claim 10, according to which the fields corresponding to the route distinction parameter identifying a local interface, to the true and simulated BGP identifiers of said local interface, and to the true and simulated BGP identifiers for the remote interface connected by the junction coming from said local interface are propagated by BGP routing.

12. An edge router (102) of an IP communications network (150), the edge router implementing Border Gateway Protocol - BGP compliant routing, the edge router comprising a local interface (113) of a trunk (111) carrying a BGP neighbourhood, the trunk having a remote interface (114) on a remote edge router (112), the local interface being configured by implementing the configuration method according to any one of the preceding claims.
